(19) Europäisches Patentamt / European Patent Office / Office européen des brevets

(11) **EP 2 567 746 A1**

(12) **EUROPEAN PATENT APPLICATION**

(43) Date of publication:
**13.03.2013   Bulletin 2013/11**

(51) Int Cl.:
***B01D 53/04*** *(2006.01)*

(21) Application number: **12180821.6**

(22) Date of filing: **17.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.09.2011   JP 2011197836**

(71) Applicant: **Hitachi Ltd.**
**Tokyo 100-8280 (JP)**

(72) Inventors:
• **Sato, Hiroki**
  **Tokyo, 100-8220 (JP)**
• **Yoshikawa, Kohei**
  **Tokyo, 100-8220 (JP)**
• **Kaneeda, Masato**
  **Tokyo, 100-8220 (JP)**
• **Orita, Hisayuki**
  **Tokyo, 100-8220 (JP)**
• **Kanno, Shuichi**
  **Tokyo, 100-8220 (JP)**

(74) Representative: **Beetz & Partner**
**Patentanwälte**
**Steinsdorfstrasse 10**
**80538 München (DE)**

(54)   **Carbon dioxide recovery system**

(57)   A carbon dioxide recovery system is provided, in which, a filling rate of the carbon dioxide sorbent in the container indicated by f [%] is positive and larger than or equal to the value obtained by the following expression of $100 \times (p/(RT)) \times (x-C) / (a \times (100 + x/r - 100 \times x/(rC) - x) + (p/(RT)) \times (x-C))$, with respect to the effective molar quantity of the captured carbon dioxide per 1 L of the carbon dioxide sorbent ($= a$) of the carbon dioxide sorbent to be used, wherein a demanded concentration of recovered carbon dioxide is indicated by x [%], and an amount of the captured gases other than carbon dioxide is indicated by r, and a concentration of dried carbon dioxide in a carbon dioxide-containing gas is indicated by C [%], and a total pressure of the carbon dioxide sorbent occurring when carbon dioxide is captured is indicated by p [Pa].

FIG. 1

EP 2 567 746 A1

**Description**

**BACKGROUND OF THE INVENTION**

1. Field of the Invention

The present invention relates to a carbon dioxide recovery system using a carbon dioxide sorbent.

2. Description of the Related Art

For suppression of global warming, it is demanded to reduce an emission amount of carbon dioxide ($CO_2$) that has a great impact on the global warming as a greenhouse gas. Japanese Unexamined Patent Publication No. 2001-205045 discloses a technique for suppressing emission of carbon dioxide. The sentence of "an apparatus for continuously removing carbon dioxide from an exhaust gas is provided, the apparatus having a high recovery efficiency and being easily operated and space-saving" is described in the Patent Publication. However, the drum in the apparatus is required to be continuously rotated and the size of the apparatus also becomes very large, for example, when an amount of an exhaust gas becomes large as in a thermal power plant; and hence a rotating drum type is not suitable.
On the other hand, two conventional techniques described below, etc., have been used for recovering, from a carbon dioxide-containing gas, the carbon dioxide whose concentration is 90% or more by using a carbon dioxide sorbent: a technique in which a step (purge by carbon dioxide) is incorporated, the step being used for removing impurities other than carbon dioxide by bringing a high concentration of carbon dioxide in contact with a carbon dioxide sorbent having captured carbon dioxide; and a technique in which a captured carbon dioxide-containing gas, the carbon dioxide concentration of which does not meet a demanded concentration, is again made to flow into a container for containing a carbon dioxide sorbent (Japanese Unexamined Patent Publication No. 1996-131767).

**SUMMARY OF THE INVENTION**

An object of the present invention is to make it possible to obtain carbon dioxide whose concentration is 90% or more when the carbon dioxide captured by a carbon dioxide sorbent is recovered, even without a purge step by a high concentration of carbon dioxide or a technique in which carbon dioxide is made, multiple times, to flow into a container for containing a carbon dioxide sorbent.
In order to attain the aforementioned object, for example, the configurations described in claims are adopted. The present application involves a plurality of means for attaining the aforementioned object, and one example thereof relates to a carbon dioxide recovery system for recovering a high concentration of carbon dioxide from a carbon dioxide-containing gas. The carbon dioxide recovery system includes: a carbon dioxide sorbent; a container for containing the carbon dioxide sorbent; a channel for making the carbon dioxide-containing gas flow into the container; a channel for making moisture vapor flow into the container; a channel for discharging a gas from which carbon dioxide has been removed in the container; a channel for discharging carbon dioxide captured in the container; a shutoff valve provided in each of the channels; and a means for measuring temperature at each of multiple points in the container, in which, when an effective molar quantity of the captured carbon dioxide per 1 L of the carbon dioxide sorbent, under an operating condition, is indicated by a [mol/L], a filling rate of the carbon dioxide sorbent in the container is indicated by f [%], a selective ratio of the captured carbon dioxide, a value which is obtained by dividing the effective molar quantity of the captured carbon dioxide (= a) by an amount of the captured gases other than carbon dioxide, which have been measured under the same temperature and partial pressure condition, is indicated by r [-], a concentration of dried carbon dioxide in the carbon dioxide-containing gas is indicated by C [%], a demanded concentration of recovered carbon dioxide is indicated by x [%], a temperature of the carbon dioxide sorbent occurring when carbon dioxide is captured is indicated by T [K], a total pressure of the carbon dioxide sorbent occurring when carbon dioxide is captured is indicated by p [Pa], and the gas constant is indicated by R [Pa * L/(K * mol)], the filling rate f is made to be larger than the value obtained from the following expression of $100 \times (p/(RT)) \times (x-C)/(a \times (100 + x/r - 100 \times x/(rC) - x) + (p/(RT)) \times (x-C))$, with respect to the effective molar quantity of the captured carbon dioxide (= a) of a carbon dioxide sorbent to be used.
According to the present invention, carbon dioxide whose concentration is 90% or more can be obtained when the carbon dioxide captured by a carbon dioxide sorbent is recovered, even without a purge step by carbon dioxide or a technique in which carbon dioxide is made, multiple times, to flow into a container for containing a carbon dioxide sorbent.

**BRIEF DESCRIPTION OF THE DRAWINGS**

Fig. 1 is a thematic view illustrating part of a carbon dioxide recovery system;

Fig. 2 is a graph showing the correlation between a molar quantity of captured carbon dioxide and a filling rate of a carbon dioxide sorbent, which are to be met, when a concentration of a carbon dioxide-containing gas is 50% and that of recovered carbon dioxide is 90%;

Fig. 3 is a graph showing the correlation between the molar quantity of the captured carbon dioxide and the filling rate of the carbon dioxide sorbent, which are to be met, when the concentration of the carbon dioxide-containing gas is 10% and that of the recovered carbon dioxide is 90%;

Fig. 4 is a graph showing the correlation between the molar quantity of the captured carbon dioxide and the filling rate of the carbon dioxide sorbent, which are to be met, when the concentration of the carbon dioxide-containing gas is 50% and that of the recovered carbon dioxide is 95%;

Fig. 5 is a graph showing the correlation between the molar quantity of the captured carbon dioxide and the filling rate of the carbon dioxide sorbent, which are to be met, when the concentration of the carbon dioxide-containing gas is 10% and that of the recovered carbon dioxide is 95%;

Fig. 6 is a graph showing the correlation between the molar quantity of the captured carbon dioxide and the filling rate of the carbon dioxide sorbent, which are to be met, when the concentration of the carbon dioxide-containing gas is 50% and that of the recovered carbon dioxide is 99%;

Fig. 7 is a graph showing the correlation between the molar quantity of the captured carbon dioxide and the filling rate of the carbon dioxide sorbent, which are to be met, when the concentration of the carbon dioxide-containing gas is 10% and that of the recovered carbon dioxide is 99%;

Fig. 8 is a graph showing the correlation between the molar quantity of the captured carbon dioxide and the filling rate of the carbon dioxide sorbent, which are to be met, when the concentration of the carbon dioxide-containing gas is 10%, that of the recovered carbon dioxide is 95%, and the temperature is 50°C and the pressure is 101325 Pa when the carbon dioxide is captured;

Fig. 9 is a graph showing the correlation between the molar quantity of the captured carbon dioxide and the filling rate of the carbon dioxide sorbent, which are to be met, when the concentration of the carbon dioxide-containing gas is 10%, that of the recovered carbon dioxide is 95%, and the temperature is 50°C and the pressure is 1013250 Pa when the carbon dioxide is captured; and

Fig. 10 is a graph showing the correlation between the molar quantity of the captured carbon dioxide and the filling rate of the carbon dioxide sorbent, which are to be met, when the concentration of the carbon dioxide-containing gas is 10%, that of the recovered carbon dioxide is 95%, and the temperature is 600°C and the pressure is 101325 Pa when the carbon dioxide is captured;

## DETAILED DESCRIPTION OF THE PREFERRED EMBODIMENTS

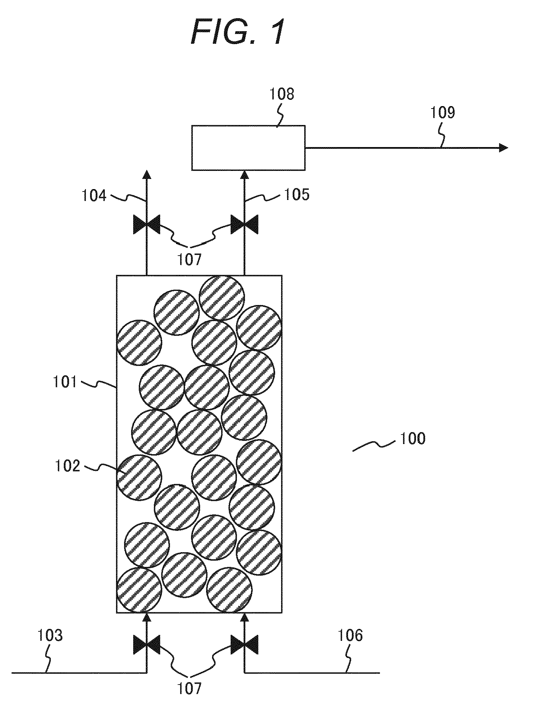

As a form for carrying out the present invention, an example of a carbon dioxide recovery system 100 for recovering a high concentration of carbon dioxide from a carbon dioxide-containing gas will be described. Fig. 1 illustrates an example of the configuration of the carbon dioxide recovery system. Carbon dioxide is removed from a carbon dioxide-containing gas by bringing the carbon dioxide-containing gas in contact with a carbon dioxide sorbent 102 after the carbon dioxide-containing gas has passed through a channel 103 through which the carbon dioxide-containing gas flows into a container 101 for containing the carbon dioxide sorbent 102, and a gas from which the carbon dioxide has been removed is discharged in the atmosphere by making the gas flow through a channel 104 (channel for making a gas from which carbon dioxide has been removed flow).

After a lapse of a predetermined period of time during which a preset amount of carbon dioxide has been captured by the carbon dioxide sorbent, a carrier gas is made to flow from a channel 106 (carrier gas channel) while the carbon dioxide sorbent and the container for containing the carbon dioxide sorbent are being heated, thereby allowing the carbon dioxide captured by the carbon dioxide sorbent to be desorbed. Thereafter, a high concentration of carbon dioxide can be recovered in a channel 109 (channel for recovering a high concentration of carbon dioxide) by making the carrier gas and the carbon dioxide desorbed from the carbon dioxide sorbent flow through a channel 105, and by using a means 108 for separating the carrier gas and the carbon dioxide. Because a gas is made to flow through a channel for the flow of the gas when carbon dioxide is captured or desorbed, each of the channels for the flow of the gas is controlled by providing a gas shutoff valve 107.

As the carrier gas, any of, for example, moisture vapor, nitrogen, oxygen, helium, and vapors of both alcohols, such as methanol and ethanol, and ketones, such as acetone, etc., may be used; however, a gas whose boiling point is within a range of approximately 100 ± 50°C under 1 atmospheric pressure is preferable, so that the gas is easily separated from carbon dioxide by being cooled when the carbon dioxide has been recovered from a carbon dioxide sorbent. Examples of such a gas include moisture vapor, alcohols, such as methanol and ethanol, and ketones, such as acetone, etc.

The carbon dioxide sorbent may have any shape, such as a grain shape, honeycomb shape, plate shape, foam metal shape, etc. ; however, a grain shape is more preferable because a filling rate can be made very large when used.

In addition, examples of the means for desorbing the captured carbon dioxide include both the heating at an increased temperature of 200°C or lower and a method in which the pressure in the container 101 is reduced by a pressure difference of 15 atmosphere pressure or lower, which is obtained by providing a vacuum pump in the channel 105 for recovering a high concentration of carbon dioxide. Examples of the means 108 for separating the carrier gas and carbon dioxide include, for example, a method in which the carrier gas and carbon dioxide are separated from each other by cooling them to a temperature lower than or equal to the boiling point of the carrier gas, or compressing them, or cooling and compressing them, so that only the carrier gas is liquidized.

The concentration of the recovered carbon dioxide can be determined by: a molar quantity of the captured carbon dioxide of the carbon dioxide sorbent; a filling rate of the carbon dioxide sorbent in the container; and a selective ratio of the captured carbon dioxide of the carbon dioxide sorbent. Herein, an effective molar quantity of the captured carbon dioxide per 1 L of the carbon dioxide sorbent, under an operating condition, is indicated by a [mol/L], a filling rate of the carbon dioxide sorbent in the container is indicated by f [%], a selective ratio of the captured carbon dioxide, a value which is obtained by dividing the effective molar quantity of the captured carbon dioxide (= a) by an amount of captured gases other than carbon dioxide, which have been measured under the same temperature and partial pressure condition, is indicated by r [-], a concentration of dried carbon dioxide in the carbon dioxide-containing gas is indicated by C [%], a concentration of the recovered carbon dioxide is indicated by x [%], a temperature of the carbon dioxide sorbent occurring when carbon dioxide is captured is indicated by T [K], a total pressure of the carbon dioxide sorbent occurring when carbon dioxide is captured is indicated by p [Pa], the gas constant is indicated by R [Pa * L/(K * mol)], and the size of the container is indicated by L [L].

Herein, the effective molar quantity of the captured carbon dioxide means a difference between a molar quantity of the captured carbon dioxide occurring when the carbon dioxide is captured and that occurring when the carbon dioxide is desorbed, during the operation of the carbon dioxide recovery system.

The concentration of the recovered carbon dioxide can be determined by a molar ratio of the gases remaining in the container when a step of capturing carbon dioxide is completed. The molar quantity of the carbon dioxide in the container is a total of the effective molar quantity of the captured carbon dioxide of the carbon oxide sorbent: a × L × (f/100) and the molar quantity of the gaseous carbon dioxide remaining in the space of the container: (L × (100-f) /100) × C/100 × (p/(RT)).

On the other hand, the total molar quantity of the gases in the container is a total of the following three: the molar quantity of the carbon dioxide in the container; a molar quantity of the gases other than carbon dioxide, captured by the carbon dioxide sorbent; and a molar quantity of the gases other than gaseous carbon oxide, remaining in the space of the container.

Because gases other than carbon dioxide are captured at a pressure of (100-C)/C times of the partial pressure of the carbon dioxide and at a selective ratio of 1/r, by the carbon dioxide sorbent, the molar quantity of the gases other than carbon dioxide becomes (a × L × (f/100) × ((100-C)/C) × (1/r)). The molar quantity of the gases other than the gaseous carbon dioxide, remaining in the space of the container, is (L × (100-f)/100) × ((100-C)/100) × (p/(RT)). Accordingly, the concentration of the recovered carbon dioxide (= x [%]) is defined by the following Expression 1.

$$x/100 = ((af/100) + (100 - f/100) \times (C/100) \times p/(RT))/(af$$
$$/100 \times (rC + 100 - C)/rC + (100-f)/100 \times p/RT)$$

(Expression 1)

The concentration of the recovered carbon dioxide becomes larger than or equal to a preset value x [%] under a condition in which the following Expression 2 is satisfied.

$$x/100 \leq ((af/100) + (100 - f/100) \times (C/100) \times$$
$$p/(RT))/(af/100 \times (rC + 100 - C)/rC + (100-f)/100 \times p/(RT))$$

(Expression 2)

C and p/RT, which are variables, are changed in accordance with a carbon dioxide recovery system, and the demanded concentration of the recovered carbon dioxide (= x [%]) is changed in accordance with a condition to be adopted. Accordingly, remaining variables can be made to be design variables.

The following three variables: an effective molar quantity of the captured carbon dioxide per 1 L of the carbon dioxide sorbent under an operating condition (= a [mol/L]); a filling rate of the carbon dioxide sorbent in the container (= f [%]); and a selective ratio of the captured carbon dioxide, a value which is obtained by dividing the effective molar quantity of the captured carbon dioxide (= a) by an amount of the captured gases other than carbon dioxide, which have been measured under the same temperature and partial pressure condition (= r [-]), can be made to be design variables.

When the above Expression 2 is solved with respect to the effective molar quantity of the captured carbon dioxide (= a) and the filling rate of the carbon dioxide sorbent (= f), among these three variables,

$$f \geq 100 \times (p/(RT)) \times (x-C)/(a \times (100 + x/r - 100 \times x/(rC)$$
$$- x) + (p/(RT)) \times (x-C)) \qquad \text{(Expression 3)}$$

and

$$a \geq (100-f) \times (p/(RT)) \times (x-C)/(f \times (100 + x/r - 100 \times$$
$$x/(rC) - x)) \qquad \text{(Expression 4)}$$

are obtained.

That is, when the effective molar quantity of the captured carbon dioxide (= a) of the carbon dioxide sorbent and the selective ratio of the captured carbon dioxide (= r) are determined, a filling rate condition for meeting the demanded concentration of the recovered carbon dioxide (= x) can be obtained by Expression 3. Similarly, when the filling rate f and the selective ratio of the captured carbon dioxide (= r) are determined, a condition of the effective molar quantity of the captured carbon dioxide for meeting the demanded concentration of the recovered carbon dioxide (= x) can be obtained by Expression 4. In addition, it is clear that r, a, f, and x should be adjusted to obtain positive values in Expressions 3 and 4.

Although it is possible to separate, in a cooling step and a compression step, the recovered carbon dioxide from gases other than carbon dioxide, it is demanded that carbon dioxide is recovered at a high concentration of at least 90% or more in order to reduce the cost for the cooling step and the compression step. Accordingly, when the demanded concentration of the recovered carbon dioxide (= x) is 90%, the above two Expressions are represented as follows:

$$f \geq 100 \times (p/(RT)) \times (90-C)/(a \times (10 + 90/r - 9000/(rC))$$
$$+ (p/(RT)) \times (90-C)) \qquad \text{(Expression 5)}$$

$$a \geq (100-f) \times (p/(RT)) \times (90-C)/(f \times (10 + 90/r - 9000/(rC))) \qquad \text{(Expression 6)}$$

Further, assuming that, when carbon dioxide is captured, the temperature is 50°C and the pressure is 101325 Pa that is the atmospheric pressure, the above two Expressions are represented as follows:

$$f \geq 3.77 \times (90-C)/(a \times (10 + 90/r - 9000/(rC)) + 0.0377$$
$$\times (90-C)) \qquad \text{(Expression 7)}$$

$$a \geq (100-f) \times 0.0377 \times (90-C)/(f \times (10 + 90/r - 9000/(rC)))$$

(Expression 8)

Furthermore, even if the case is considered where the concentration of carbon dioxide is 50%, which is an easy condition, because a carbon dioxide recovery system in which the concentration of the carbon dioxide in a carbon dioxide-containing gas is within a range of 10% or more and 50% or less is to be targeted, f and a are required to satisfy at least the following Expressions, respectively:

$$f \geq 150.8/(a \times (10 - 90/r) + 1.508)$$ (Expression 9)

$$a \geq (100-f) \times 1.508/(f \times (10 - 90/r))$$ (Expression 10)

In addition to that, because the right side of Expression 7 should be positive, r is required to be larger than or equal to 10. That is, it is indicated that carbon dioxide sorbents having a selective ratio of the captured carbon dioxide of 10 or larger can only be used under these conditions. As a method of filling the container with a carbon dioxide sorbent in the case where the demanded filling rate of the carbon dioxide sorbent is high, when the carbon dioxide sorbent has, for example, a spherical shape, the closest packing ratio of the carbon dioxide sorbents having a constant diameter is 74%; however, the closest packing ratio can be increased to a filling rate higher than or equal to 74% by using spherical carbon dioxide sorbents having different diameters.

As specific examples of the carbon dioxide sorbent, for example, molecular sieve 4A has a selective ratio of captured carbon dioxide (= r) of 2.8, clinoptilolite has that of 2.2, and mordenite has that of 1.9, under the conditions in which only nitrogen is used as a gas other than carbon dioxide, the temperature is 24°C, and the pressure is 50 kPa. Also, under the conditions in which the temperature is 24°C and the pressure is 10 kPa, molecular sieve 4A has a selective ratio of captured carbon dioxide (= r) of 8.8, clinoptilolite has that of 4.7, and mordenite has that of 2.3 (Handbook of Adsorption Technology, NTS Inc., 1993, P 18).

Among them, molecular sieve 4A, under the condition in which the pressure is 10 kPa, has the largest selective ratio of captured carbon dioxide (= r) ; however, even when this value is used, the concentration of the recovered carbon dioxide is 50% under the conditions in which the pressure is 101325 Pa that is the atmosphericpressure, the concentration of the carbon dioxide in a carbon dioxide-containing gas is 10%, and the temperature is 50°C, and hence the carbon dioxide cannot be compressed to a high concentration. Accordingly, in order to obtain a high concentration of carbon dioxide, it is needed to make carbon dioxide flow through a carbon dioxide sorbent in multiple stages, or a step is needed in which a high concentration of a carbon dioxide gas is brought into contact with a carbon dioxide sorbent to remove gases other than carbon dioxide.

A selective ratio of the captured carbon dioxide (= r) is changed depending on pressure. However, the selective ratio of the captured carbon dioxide (= r) is required to be 10 or larger. When carbon dioxide sorbents having a low selectivity, such as, for example, molecular sieve 4A, clinoptilolite, and mordenite, are used, most of them have a selective ratio of 10 or larger only under a constant pressure of 10 kPa or lower. They are generally referred to as carbon dioxide sorbents involving physical adsorption.

On the other hand, as a carbon dioxide sorbent having a selective ratio of the captured carbon dioxide larger than 10 under a pressure of 50 kPa or lower, there is a chemical adsorbent, etc. , that keeps a stable captured state by a chemical reaction with carbon dioxide. Examples thereof include oxides containing at least one of Na, Mg, Al, Si, K, Ca, Ti, Rb, Sr, Y, Zr, Cs, Ba, Fr, Ra, and lanthanoid element. In particular, an oxide containing Al, Ti, Zr, and Ce has both high reactivity with carbon dioxide and a selective ratio of the captured carbon dioxide of 100 or larger, and has a large area per weight, and hence the oxide is effective as a carbon dioxide sorbent for the carbon dioxide recovery system according to the present invention.

Hereinafter, Examples will be described.

[Example 1]

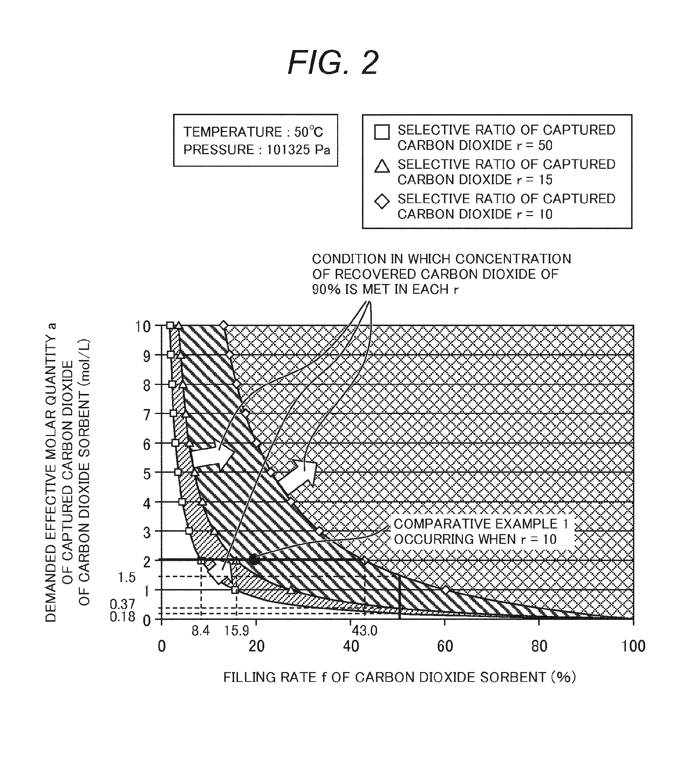

An example of operating a carbon dioxide recovery system will be described. When a carbon dioxide recovery system is operated under conditions in which the demanded concentration of the recovered carbon dioxide is 90%, the concentration of the carbon dioxide in a carbon dioxide-containing gas is 50% on a dry basis, and the pressure is 101325 Pa and the temperature is 50°C when carbon dioxide is captured, the relationship between a demanded effective molar quantity of the captured carbon dioxide (= a) and a filling rate (= f) of a carbon dioxide sorbent is calculated from Expression 2 to be shown in Fig. 2. Calculations were performed by using Expressions 3 and 4 with respect to a selective ratio of the captured carbon dioxide (= r) of 50, 15, and 10.

For example, when a carbon dioxide sorbent whose effective molar quantity of the captured carbon dioxide is 2 mol/L is used, it can be learned that, when the selective ratio of the captured carbon dioxide (= r) is 50, the filling rate is required to be 8.4% or more, when r is 15, the filling rate is required to be 15.9% or more, and when r is 10, the filling rate is required to be 43.0% or more.

Alternatively, when the filling rate is, for example, fixed to be 50%, it can be learned that, when r is 50, the demanded effective molar quantity of the captured carbon dioxide is 0.18 mol/L or more, when r is 15, the demanded effective molar quantity of the captured carbon dioxide is 0.37 mol/L or more, and when r is 10, the demanded effective molar quantity of the captured carbon dioxide is 1.5 mol/L or more. When the filling rate and the effective molar quantity of the captured carbon dioxide are set as stated above, a carbon dioxide recovery system that meets the demanded concentration of the recovered carbon dioxide can be designed.

**[Comparative Example 1]**

As a comparative example, when it was assumed that the selective ratio of the captured carbon dioxide (= r) was 10 and the filling rate was 20%, and when a carbon dioxide sorbent whose effective molar quantity of the captured carbon dioxide was 2 mol/L that was outside the range designated by Expression 4 was used, the concentration of the recovered carbon dioxide, calculated by using Expression 2, was 88.2%, which was smaller than the demanded concentration of the recovered carbon dioxide of 90%.

Accordingly, if a carbon dioxide sorbent whose effective molar quantity of the captured carbon dioxide is outside the range designated by Expression 4 is used, it is needed to add another step, such as a step in which impurity gases are purged by a carbon dioxide gas after carbon dioxide has been captured, or a step in which carbon dioxide is repeatedly captured and recovered in multiple stages, in order to increase the concentration of the recovered carbon dioxide to a demanded concentration thereof; and hence operation cost and apparatus cost are additionally needed, which is not desirable.

When the selective ratio of the captured carbon dioxide (= r) was made to be 9 or smaller, the concentration of the recovered carbon dioxide was not able to exceed 90% even when the filling rate was made to be 99%.

From this result, even when the concentration of the carbon dioxide in a carbon dioxide-containing gas is as high as 50%, the selective ratio of the captured carbon dioxide of a carbon dioxide sorbent is required to be 10 or larger, in order to make the concentration of the recovered carbon dioxide to be 90% or more. It can also be learned that, as the selective ratio of the captured carbon dioxide becomes larger, both the effective molar quantity of the captured carbon dioxide and the filling rate can be made smaller.

**[Example 2]**

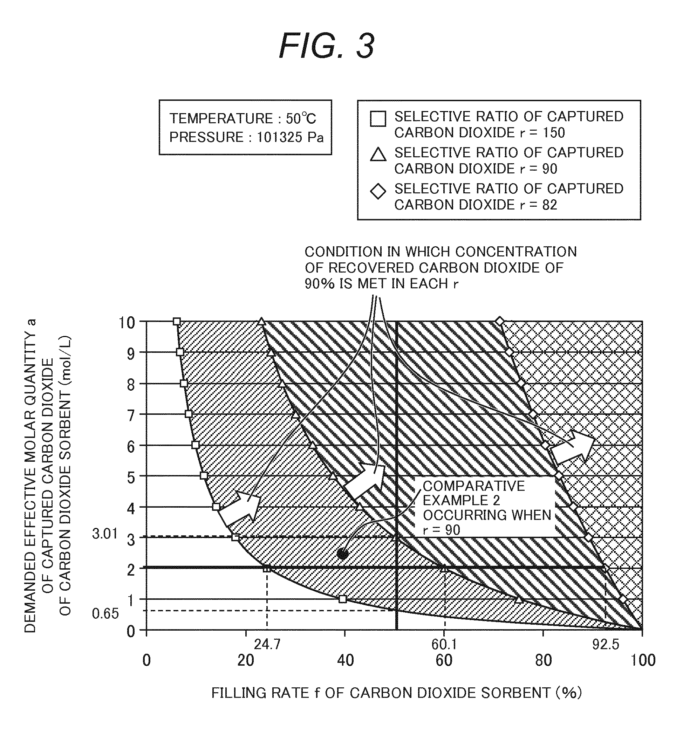

In the present Example, the case where the concentration of carbon dioxide is 10% on a dry basis will be described. When the carbon dioxide recovery system is operated under conditions in which the demanded concentration of the recovered carbon dioxide is 90%, the concentration of the carbon dioxide in the carbon dioxide-containing gas is 10% on a dry basis, and the pressure is 101325 Pa and the temperature is 50°C when carbon dioxide is captured, the relationship between the demanded effective molar quantity of the captured carbon dioxide (= a) and the filling rate (= f) of a carbon dioxide sorbent is calculated from Expression 2 to be shown in Fig. 3. Calculations were performed by using Expressions 3 and 4 with respect to the selective ratio of the captured carbon dioxide (= r) of 150, 90, and 82.

For example, when a carbon dioxide sorbent whose effective molar quantity of the captured carbon dioxide is 2 mol/L is used, it can be learned that, when the selective ratio of the captured carbon dioxide (= r) is 150, the filling rate is required to be 24.7% or more, when r is 90, the filling rate is required to be 60.1% or more, and when r is 82, the filling rate is required to be 92.5% or more.

Alternatively, when the filling rate is, for example, fixed to be 50%, it can be learned that, when r is 150, the demanded effective molar quantity of the captured carbon dioxide is 0.65 mol/L or more, when r is 90, the demanded effective molar quantity of the captured carbon dioxide is 3.01 mol/L or more, and when r is 82, the demanded effective molar quantity of the captured carbon dioxide is 24.7 mol/L or more. When the filling rate and the effective molar quantity of the captured carbon dioxide are set as stated above, a carbon dioxide recovery system that meets the demanded concentration of the recovered carbon dioxide can be designed.

**[Comparative Example 2]**

As a comparative example, when it was assumed that the selective ratio of the captured carbon dioxide (= r) was 90 and the filling rate was 40%, and when a carbon dioxide sorbent whose effective molar quantity of the captured carbon dioxide was 2.5 mol/L that was outside the range designated by Expression 4 was used, the concentration of the recovered carbon dioxide, calculated by using Expression 2, was 52.1%, which was smaller than the demanded concentration of the recovered carbon dioxide of 90%.

Accordingly, if a carbon dioxide sorbent whose effective molar quantity of the captured carbon dioxide is outside the range designated by Expression 4 is used, it is needed to add another step, such as a step in which impurity gases are purged by a carbon dioxide gas after carbon dioxide has been captured, or a step in which carbon dioxide is repeatedly captured and recovered in multiple stages, in order to increase the concentration of the recovered carbon dioxide to a demanded concentration thereof; and hence operation cost and apparatus cost are additionally needed, which is not desirable.

When the selective ratio of the captured carbon dioxide (= r) was made to be 81 or smaller, the concentration of the recovered carbon dioxide was not able to exceed 90% even when the filling rate was made to be 99%. From this result, when the concentration of the carbon dioxide in a carbon dioxide-containing gas is as low as 10%, the selective ratio of the captured carbon dioxide of a carbon dioxide sorbent is required to be 82 or larger, in order to make the concentration of the recovered carbon dioxide to be 90% or more. It can also be learned that, as the selective ratio of the captured carbon dioxide becomes larger, both the effective molar quantity of the captured carbon dioxide and the filling rate can be made smaller.

**[Example 3]**

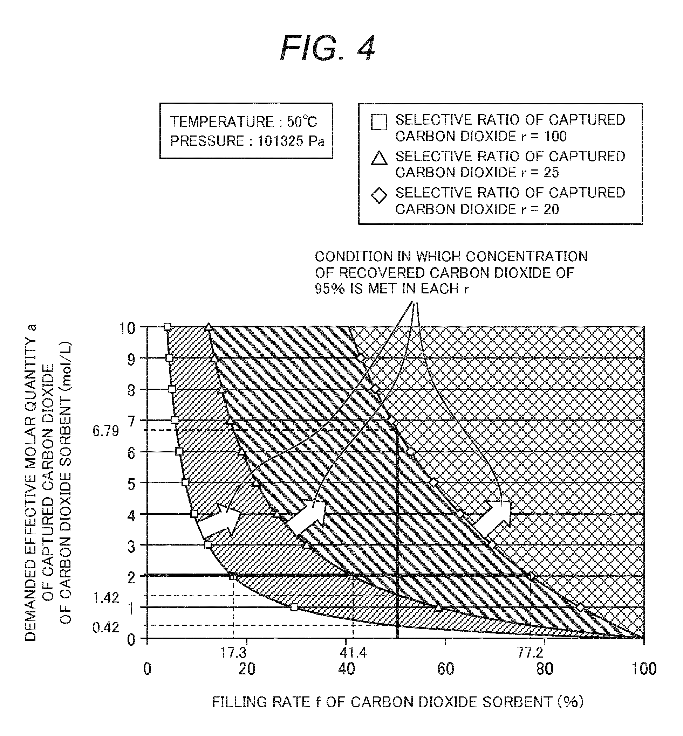

In the present Example, the case where the demanded concentration of carbon dioxide is 95% and the concentration of carbon dioxide is 50% on a dry basis will be described. When a carbon dioxide recovery system is operated under conditions in which the demanded concentration of the recovered carbon dioxide is 95%, the concentration of the carbon dioxide in a carbon dioxide-containing gas is 50% on a dry basis, and the pressure is 101325 Pa and the temperature is 50°C when carbon dioxide is captured, the relationship between the demanded effective molar quantity of the captured carbon dioxide (= a) and the filling rate (= f) of a carbon dioxide sorbent is calculated from Expression 2 to be shown in Fig. 4. Calculations were performed by using Expressions 5 and 6 with respect to the selective ratio of the captured carbon dioxide (= r) of 100, 25, and 20.

For example, when a carbon dioxide sorbent whose effective molar quantity of the captured carbon dioxide is 2 mol/L is used, it can be learned that, when the selective ratio of the captured carbon dioxide (= r) is 100, the filling rate is required to be 17.3% or more, when r is 25, the filling rate is required to be 41.4% or more, and when r is 20, the filling rate is required to be 77.2% or more.

Alternatively, when the filling rate is, for example, fixed to be 50%, it can be learned that, when r is 100, the demanded effective molar quantity of the captured carbon dioxide is 0.42 mol/L or more, when r is 25, the demanded effective molar quantity of the captured carbon dioxide is 1.42 mol/L or more, and when r is 20, the demanded effective molar quantity of the captured carbon dioxide is 6.79 mol/L or more. When the filling rate and the effective molar quantity of the captured carbon dioxide are set as stated above, a carbon dioxide recovery system that meets a demanded concentration of the recovered carbon dioxide can be designed.

When the selective ratio of the captured carbon dioxide (= r) was made to be 19 or smaller, the concentration of the recovered carbon dioxide was not able to exceed 95% even when the filling rate was made to be 99%. From this result, even when the concentration of the carbon dioxide in a carbon dioxide-containing gas is as high as 50%, the selective ratio of the captured carbon dioxide of a carbon dioxide sorbent is required to be 20 or larger, in order to make the concentration of the recovered carbon dioxide to be 95% or more. It can also be learned that, as the selective ratio of the captured carbon dioxide becomes larger, both the effective molar quantity of the captured carbon dioxide and the filling rate can be made smaller.

**[Example 4]**

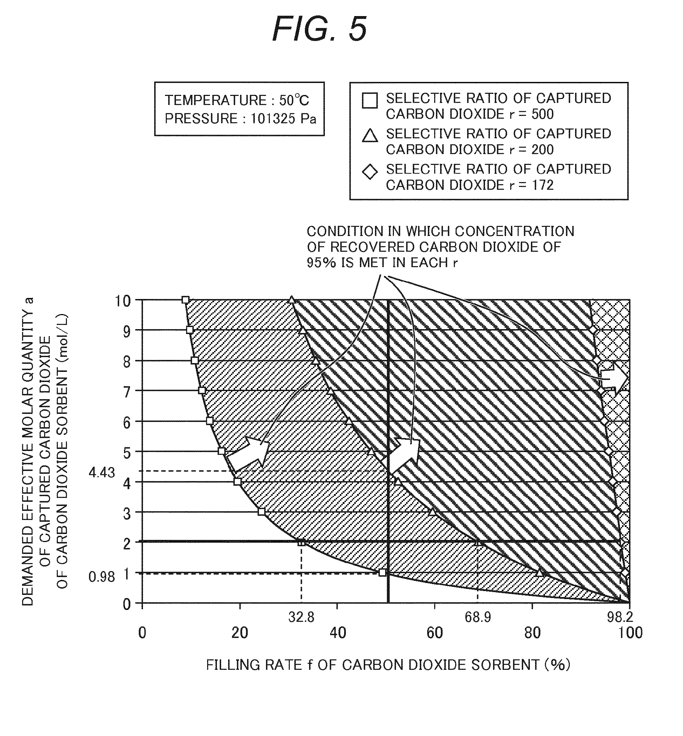

In the present Example, the case where the demanded concentration of carbon dioxide is 95% and the concentration of carbon dioxide is 10% on a dry basis will be described. When the carbon dioxide recovery system is operated under conditions in which the demanded concentration of the recovered carbon dioxide is 95%, the concentration of the carbon dioxide in a carbon dioxide-containing gas is 10% on a dry basis, and the pressure is 101325 Pa and the temperature is 50°C when carbon dioxide is captured, the relationship between the demanded effective molar quantity of the captured carbon dioxide (= a) and the filling rate(= f) of a carbon dioxide sorbent is calculated fromExpression 2 to be shown in Fig. 5. Calculations were performed by using Expressions 7 and 8 with respect to the selective ratio of the captured carbon dioxide (= r) of 500, 200, and 172.

For example, when a carbon dioxide sorbent whose effective molar quantity of the captured carbon dioxide is 2 mol/L is used, it can be learned that, when the selective ratio of the captured carbon dioxide (= r) is 500, the filling rate is required to be 32.8% or more, when r is 200, the filling rate is required to be 68.9% or more, and when r is 172, the filling rate is required to be 98.2% or more.

Alternatively, when the filling rate is, for example, fixed to be 50%, it can be learned that, when r is 500, the demanded effective molar quantity of the captured carbon dioxide is 0.98 mol/L or more, when r is 200, the demanded effective molar quantity of the captured carbon dioxide is 4.43 mol/L or more, and when r is 172, the demanded effective molar quantity of the captured carbon dioxide is 111 mol/L or more. When the filling rate and the effective molar quantity of the captured carbon dioxide are set as stated above, a carbon dioxide recovery system that meets the demanded concentration of the recovered carbon dioxide can be designed.

When the selective ratio of the captured carbon dioxide (= r) was made to be 171 or smaller, the concentration of the recovered carbon dioxide was not able to exceed 95% even when the filling rate was made to be 99%. From this result, when the concentration of the carbon dioxide in a carbon dioxide-containing gas is as low as 10%, the selective ratio of the captured carbon dioxide of a carbon dioxide sorbent is required to be 172 or larger, in order to make the concentration of the recovered carbon dioxide to be 95% or more. It can also be learned that, as the selective ratio of the captured carbon dioxide becomes larger, both the effective molar quantity of the captured carbon dioxide and the filling rate can be made smaller.

**[Example 5]**

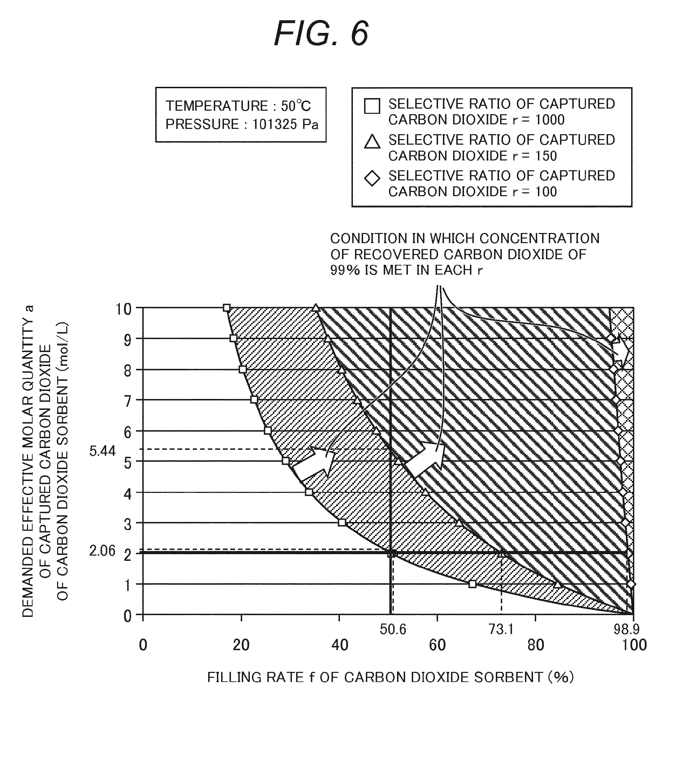

In the present Example, the case where the demanded concentration of carbon dioxide is 99% and the concentration of carbon dioxide is 50% on a dry basis will be described. When a carbon dioxide recovery system is operated under conditions in which the demanded concentration of the recovered carbon dioxide is 99%, the concentration of the carbon dioxide in a carbon dioxide-containing gas is 50% on a dry basis, and the pressure is 101325 Pa and the temperature is 50°C when carbon dioxide is captured, the relationship between the demanded effective molar quantity of the captured carbon dioxide (= a) and the filling rate(= f) of a carbon dioxide sorbent is calculated fromExpression 2 to be shown in Fig. 6. Calculations were performed by using Expressions 9 and 10 with respect to the selective ratio of the captured carbon dioxide (= r) of 1009, 150, and 100.

For example, when a carbon dioxide sorbent whose effective molar quantity of the captured carbon dioxide is 2 mol/L is used, it can be learned that, when the selective ratio of the captured carbon dioxide (= r) is 1000, the filling rate is required to be 50.6% or more, when r is 150, the filling rate is required to be 73.1% or more, and when r is 100, the filling rate is required to be 98.9% or more.

Alternatively, when the filling rate is, for example, fixed to be 50%, it can be learned that, when r is 1000, the demanded effective molar quantity of the captured carbon dioxide is 2.06 mol/L or more, when r is 150, the demanded effective molar quantity of the captured carbon dioxide is 5.44 mol/L or more, and when r is 100, the demanded effective molar quantity of the captured carbon dioxide is 185 mol/L or more. When the filling rate and the effective molar quantity of the captured carbon dioxide are set as stated above, a carbon dioxide recovery system that meets the demanded concentration of the recovered carbon dioxide can be designed.

When the selective ratio of the captured carbon dioxide (= r) was made to be 99 or smaller, the concentration of the recovered carbon dioxide was not able to exceed 99% even when the filling rate was made to be 99%. From this result, when the concentration of the carbon dioxide in a carbon dioxide-containing gas is as high as 50%, the selective ratio of the captured carbon dioxide of a carbon dioxide sorbent is required to be 100 or larger, in order to make the concentration of the recovered carbon dioxide to be 99% or more. It can also be learned that, as the selective ratio of the captured carbon dioxide becomes larger, both the effective molar quantity of the captured carbon dioxide and the filling rate can be made smaller.

**[Example 6]**

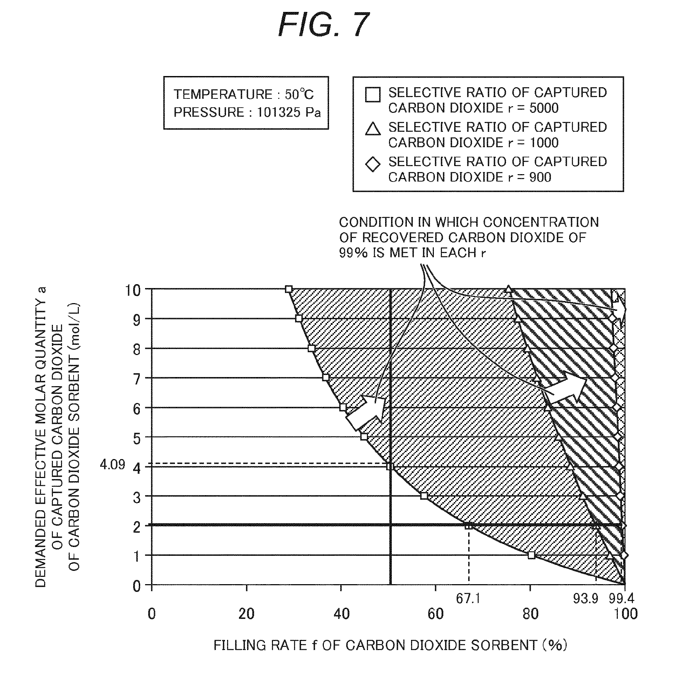

In the present Example, the case where the demanded concentration of carbon dioxide is 99% and the concentration of carbon dioxide is 99% on a dry basis will be described. When a carbon dioxide recovery system is operated under conditions in which the demanded concentration of the recovered carbon dioxide is 99%, the concentration of the carbon dioxide in a carbon dioxide-containing gas is 10% on a dry basis, and the pressure is 101325 Pa and the temperature is 50°C when carbon dioxide is captured, the relationship between the demanded effective molar quantity of the captured carbon dioxide (= a) and the filling rate (= f) of a carbon dioxide sorbent is calculated from Expression 2 to be shown in Fig. 7. Calculations were performed by using Expressions 3 and 4 with respect to the selective ratio of the captured carbon dioxide (= r) of 5000, 1000, and 900.

For example, when a carbon dioxide sorbent whose effective molar quantity of the captured carbon dioxide is 2 mol/L is used, it can be learned that, when the selective ratio of the captured carbon dioxide (= r) is 5000, the filling rate is required to be 67.1% or more, when r is 1000, the filling rate is required to be 93.9% or more, and when r is 900, the filling rate is required to be 99.4% or more.

Alternatively, when the filling rate is, for example, fixed to be 50%, it can be learned that, when r is 5000, the demanded effective molar quantity of the captured carbon dioxide is 4.09 mol/L or more, when r is 1000, the demanded effective molar quantity of the captured carbon dioxide is 30.8 mol/L or more, and when r is 900, the demanded effective molar quantity of the captured carbon dioxide is 336 mol/L or more. When the filling rate and the effective molar quantity of the captured carbon dioxide are set as stated above, a carbon dioxide recovery system that meets the demanded concentration of the recovered carbon dioxide can be designed.

When the selective ratio of the captured carbon dioxide (= r) was made to be 891 or smaller, the concentration of the recovered carbon dioxide was not able to exceed 99% even when the filling rate was made to be 99%. From this result, when the concentration of the carbon dioxide in a carbon dioxide-containing gas is as low as 10%, the selective ratio of the captured carbon dioxide of a carbon dioxide sorbent is required to be 892 or larger, in order to make the concentration of the recovered carbon dioxide to be 99% or more. It can also be learned that, as the selective ratio of the captured carbon dioxide becomes larger, both the effective molar quantity of the captured carbon dioxide and the filling rate can be made smaller.

**[Example 7]**

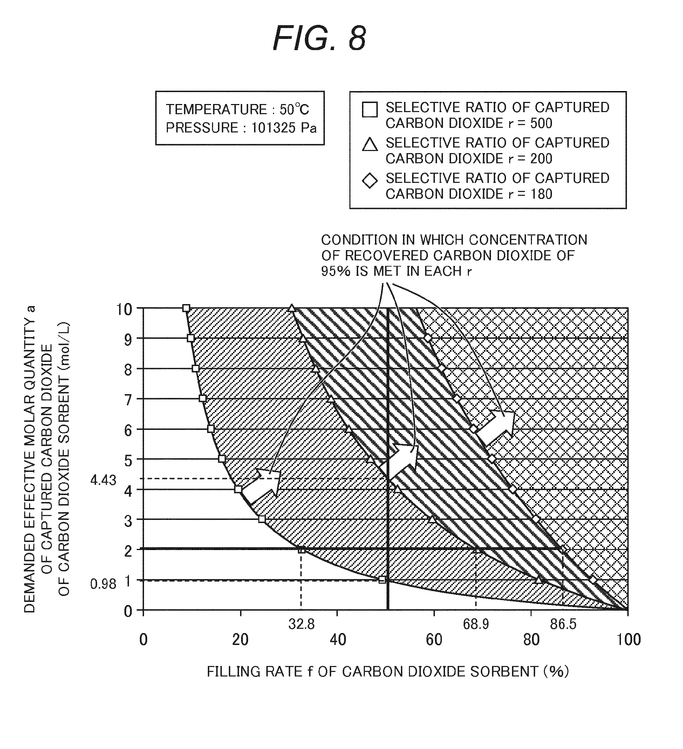

In the present Example, the case where the demanded concentration of carbon dioxide is 95% and the concentration of carbon dioxide is 10% on a dry basis will be described. When a carbon dioxide recovery system is operated under conditions in which the demanded concentration of the recovered carbon dioxide is 95%, the concentration of the carbon dioxide in a carbon dioxide-containing gas is 10% on a dry basis, and the pressure is 101325 Pa and the temperature is 50°C when carbon dioxide is captured, the relationship between the demanded effective molar quantity of the captured carbon dioxide (= a) and the filling rate (= f) of a carbon dioxide sorbent is calculated from Expression 2 to be shown in Fig. 8. Calculations were performed by using Expressions 3 and 4 with respect to the selective ratio of the captured carbon dioxide (= r) of 500, 200, and 180.

For example, when a carbon dioxide sorbent whose effective molar quantity of the captured carbon dioxide is 2 mol/L is used, it can be learned that, when the selective ratio of the captured carbon dioxide (= r) is 500, the filling rate is required to be 32.8% or more, when r is 200, the filling rate is required to be 68.9% or more, and when r is 180, the filling rate is required to be 86.5% or more.

Alternatively, when the filling rate is, for example, fixed to be 50%, it can be learned that, when r is 500, the demanded effective molar quantity of the captured carbon dioxide is 0.98 mol/L or more, when r is 200, the demanded effective molar quantity of the captured carbon dioxide is 4.43 mol/L or more, and when r is 180, the demanded effective molar quantity of the captured carbon dioxide is 12.8 mol/L or more. When the filling rate and the effective molar quantity of the captured carbon dioxide are set as stated above, a carbon dioxide recovery system that meets the demanded concentration of the recovered carbon dioxide can be designed.

When the selective ratio of the captured carbon dioxide (= r) was made to be 171 or smaller, the concentration of the recovered carbon dioxide was not able to exceed 95% even when the filling rate was made to be 99%. From this result, when the concentration of the carbon dioxide in a carbon dioxide-containing gas is 15%, the selective ratio of the captured carbon dioxide of a carbon dioxide sorbent is required to be 172 or larger, in order to make the concentration of the recovered carbon dioxide to be 95% or more. It can also be learned that, as the selective ratio of the captured carbon dioxide becomes larger, both the effective molar quantity of the captured carbon dioxide and the filling rate can be made smaller.

**[Example 8]**

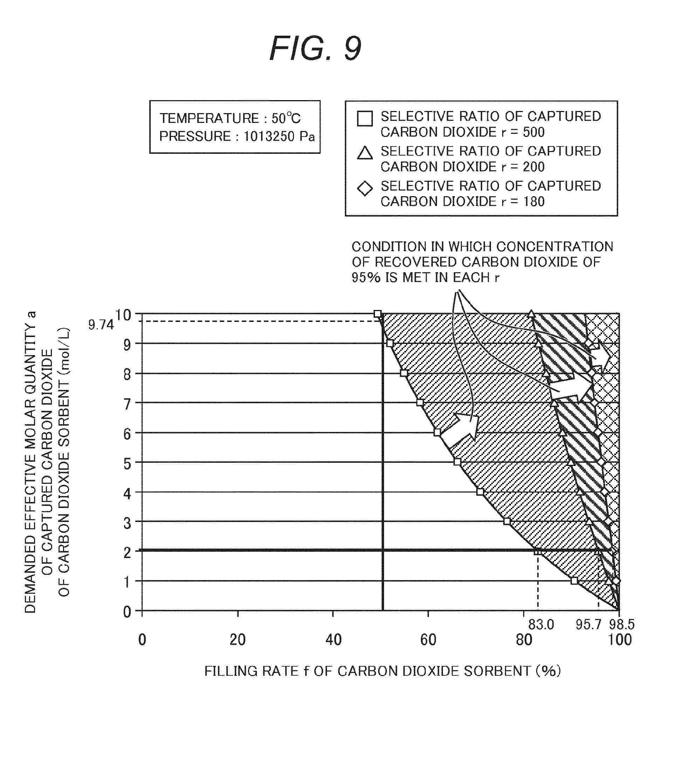

In the present Example, the case where the pressure occurring when carbon dioxide is captured is 1013250 Pa that is 10 times larger than the atmospheric pressure, the demanded concentration of carbon dioxide is 95%, and the concentration of carbon dioxide is 10% on a dry basis will be described. When a carbon dioxide recovery system is operated under conditions in which the demanded concentration of the recovered carbon dioxide is 95%, the concentration of the carbon dioxide in a carbon dioxide-containing gas is 10% on a dry basis, and the pressure is 1013250 Pa and the temperature is 50°C when carbon dioxide is captured, the relationship between the demanded effective molar quantity of the captured carbon dioxide (= a) and the filling rate (= f) of a carbon dioxide sorbent is calculated from Expression 2 to be shown in Fig. 9. Calculations were performed by using Expressions 3 and 4 with respect to the selective ratio of the captured carbon dioxide (= r) of 500, 200, and 180.

For example, when a carbon dioxide sorbent whose effective molar quantity of the captured carbon dioxide is 2 mol/L is used, it can be learned that, when the selective ratio of the captured carbon dioxide (= r) is 500, the filling rate is required to be 83.0% or more, when r is 200, the filling rate is required to be 95.7% or more, and when r is 180, the filling rate is required to be 98.5% or more.

Alternatively, when the filling rate is, for example, fixed to be 50%, it can be learned that, when r is 500, the demanded effective molar quantity of the captured carbon dioxide is 9.74 mol/L or more, when r is 200, the demanded effective molar quantity of the captured carbon dioxide is 44.2 mol/L or more, and when r is 180, the demanded effective molar quantity of the captured carbon dioxide is 128 mol/L or more. When the filling rate and the effective molar quantity of the captured carbon dioxide are set as stated above, a carbon dioxide recovery system that meets the demanded concentration of the recovered carbon dioxide can be designed.

When the selective ratio of the captured carbon dioxide (= r) was made to be 171 or smaller, the concentration of the recovered carbon dioxide was not able to exceed 95% even when the filling rate was made to be 99%. From this result, when the concentration of the carbon dioxide in a carbon dioxide-containing gas is 15%, the selective ratio of the captured carbon dioxide of a carbon dioxide sorbent is required to be 172 or larger, in order to make the concentration of the recovered carbon dioxide to be 95% or more. It can also be learned that, as the selective ratio of the captured carbon dioxide becomes larger, both the effective molar quantity of the captured carbon dioxide and the filling rate can be made smaller.

**[Example 9]**

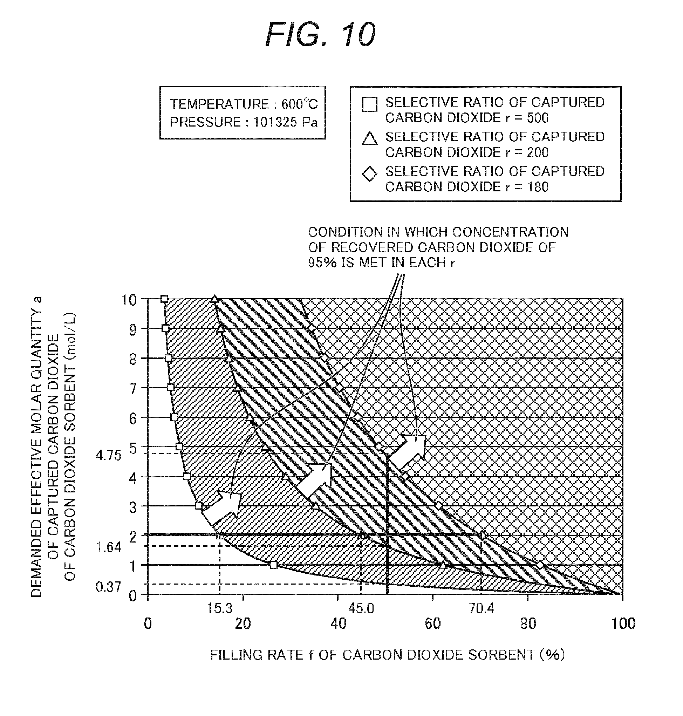

In the present Example, the case where the temperature is 600°C and the pressure is 101325 Pa that is the atmospheric pressure, when carbon dioxide is captured, the demanded concentration of carbon dioxide is 95%, and the concentration of carbon dioxide is 10% on a dry basis will be described. When a carbon dioxide recovery system is operated under conditions in which the demanded concentration of the recovered carbon dioxide is 95%, the concentration of the carbon dioxide in a carbon dioxide-containing gas is 10% on a dry basis, and the pressure is 101325 Pa and the temperature is 600°C when carbon dioxide is captured, the relationship between the demanded effective molar quantity of the captured carbon dioxide (= a) and the filling rate (= f) of a carbon dioxide sorbent is calculated from Expression 2 to be shown in Fig. 10. Calculations were performed by using Expressions 3 and 4 with respect to the selective ratio of the captured carbon dioxide (= r) of 500, 200, and 180.

For example, when a carbon dioxide sorbent whose effective molar quantity of the captured carbon dioxide is 2 mol/L is used, it can be learned that, when the selective ratio of the captured carbon dioxide (= r) is 500, the filling rate is required to be 15.3% or more, when r is 200, the filling rate is required to be 45.0% or more, and when r is 180, the filling rate is required to be 70.4% or more.

Alternatively, when the filling rate is, for example, fixed to be 50%, it can be learned that, when r is 500, the demanded effective molar quantity of the captured carbon dioxide is 0.37 mol/L or more, when r is 200, the demanded effective molar quantity of the captured carbon dioxide is 1.64 mol/L or more, and when r is 180, the demanded effective molar quantity of the captured carbon dioxide is 4.75 mol/L or more. When the filling rate and the effective molar quantity of the captured carbon dioxide are set as stated above, a carbon dioxide recovery system that meets the demanded concentration of the recovered carbon dioxide can be designed.

When the selective ratio of the captured carbon dioxide (= r) was made to be 171 or smaller, the concentration of the recovered carbon dioxide was not able to exceed 95% even when the filling rate was made to be 99%. From this result, when the concentration of the carbon dioxide in a carbon dioxide-containing gas is 15%, the selective ratio of the captured carbon dioxide of a carbon dioxide sorbent is required to be 172 or larger, in order to make the concentration of the recovered carbon dioxide to be 95% or more. It can also be learned that, as the selective ratio of the captured carbon dioxide becomes larger, both the effective molar quantity of the captured carbon dioxide and the filling rate can be made smaller.

The present invention should not be limited to the aforementioned Examples, but can include various variations. For example, the aforementioned Examples have been described in detail for easy understanding of the invention, and accordingly the invention should not be limited to examples in which all of the described configurations and conditions are provided. In addition, part of the configuration or condition in an Example may be replaced by that in another Example, or the configuration or condition in an Example may be added to that in another Example. In addition, part of the configuration or condition of each Example may be added, omitted, or replaced with another configuration or condition.

**Claims**

**1.** A carbon dioxide recovery system (100) for recovering a high concentration of carbon dioxide from a carbon dioxide-containing gas, the carbon dioxide recovery system (100) comprising:

a carbon dioxide sorbent (102);

a container (101) that contains the carbon dioxide sorbent (102);
a channel (103) that makes the carbon dioxide-containing gas flow into the container;
a channel (106) that makes moisture vapor flow into the container;
a channel (104) that discharges a gas from which carbon dioxide has been removed in the container;
a channel (105) that discharges carbon dioxide captured in the container;
a shutoff valve (107) provided in each of the channels; and
a measuring device that measures temperature at each of multiple points in the container, wherein
when an effective molar quantity of the captured carbon dioxide per 1 L of the carbon dioxide sorbent, under an operating condition, is indicated by a [mol/L], a filling rate of the carbon dioxide sorbent in the container is indicated by f [%], a selective ratio of the captured carbon dioxide, a value which is obtained by dividing the effective molar quantity of the captured carbon dioxide (= a) by an amount of the captured gases other than carbon dioxide, which have been measured under the same temperature and partial pressure condition, is indicated by r [-], a concentration of dried carbon dioxide in the carbon dioxide-containing gas is indicated by C [%], a demanded concentration of recovered carbon dioxide is indicated by x [%], a temperature of the carbon dioxide sorbent occurring when carbon dioxide is captured is indicated by T [K], a total pressure of the carbon dioxide sorbent occurring when carbon dioxide is captured is indicated by p [Pa], and the gas constant is indicated by R [Pa * L/(K * mol)], a carbon dioxide sorbent whose effective molar quantity of the captured carbon dioxide per 1 L of the carbon dioxide sorbent (= a) is positive and is larger than or equal to the value obtained by the following expression of $(100-f) \times (p/(RT)) \times (x-C)/(f \times (100 + x/r - 100 \times x/(rC) - x))$, is used with respect to the filling rate f to be adopted.

2. The carbon dioxide recovery system according to claim 1, wherein
when the demanded concentration of the recovered carbon dioxide is made to be 90%, a carbon dioxide sorbent whose effective molar quantity of the captured carbon dioxide per 1 L of the carbon dioxide sorbent (= a) is positive and is larger than or equal to the value obtained by the following expression of $(100-f) \times (p/(RT)) \times (90-C)/(f \times (10 + 90/r - 9000/(rC))$, is used with respect to the filling rate f to be adopted.

3. The carbon dioxide recovery system according to claim 2, wherein
a carbon dioxide sorbent whose effective molar quantity of the captured carbon dioxide per 1 L of the carbon dioxide sorbent (= a) is positive and is larger than or equal to the value obtained by the following expression of $(100-f) \times 0.0377 \times (90-C)/(f \times (10 + 90/r - 9000/(rC)))$ with respect to the filling rate f to be adopted.

4. The carbon dioxide recovery system according to claim 3, wherein
the carbon dioxide recovery system treats a carbon dioxide-containing gas whose concentration of carbon dioxide is within a range of 10 to 50% on a dry basis, and wherein
a carbon dioxide sorbent whose selective ratio of carbon dioxide (= r) is 10 or larger and whose effective molar quantity of the captured carbon dioxide per 1 L of the carbon dioxide sorbent (= a) is larger than or equal to the value obtained by the following expression of $(100-f) \times 1.508/(f \times (10 - 90/r)$, is used with respect to the filling rate f to be adopted.

# FIG. 1

# FIG. 2

| TEMPERATURE : 50°C |
| PRESSURE : 101325 Pa |

☐ SELECTIVE RATIO OF CAPTURED CARBON DIOXIDE r = 50
△ SELECTIVE RATIO OF CAPTURED CARBON DIOXIDE r = 15
◇ SELECTIVE RATIO OF CAPTURED CARBON DIOXIDE r = 10

CONDITION IN WHICH CONCENTRATION OF RECOVERED CARBON DIOXIDE OF 90% IS MET IN EACH r

COMPARATIVE EXAMPLE 1 OCCURRING WHEN r = 10

DEMANDED EFFECTIVE MOLAR QUANTITY a OF CAPTURED CARBON DIOXIDE OF CARBON DIOXIDE SORBENT (mol/L)

FILLING RATE f OF CARBON DIOXIDE SORBENT (%)

# FIG. 3

TEMPERATURE : 50°C
PRESSURE : 101325 Pa

☐ SELECTIVE RATIO OF CAPTURED CARBON DIOXIDE r = 150
△ SELECTIVE RATIO OF CAPTURED CARBON DIOXIDE r = 90
◇ SELECTIVE RATIO OF CAPTURED CARBON DIOXIDE r = 82

CONDITION IN WHICH CONCENTRATION OF RECOVERED CARBON DIOXIDE OF 90% IS MET IN EACH r

COMPARATIVE EXAMPLE 2 OCCURRING WHEN r = 90

DEMANDED EFFECTIVE MOLAR QUANTITY a OF CAPTURED CARBON DIOXIDE OF CARBON DIOXIDE SORBENT (mol/L)

FILLING RATE f OF CARBON DIOXIDE SORBENT (%)

# FIG. 4

TEMPERATURE : 50°C
PRESSURE : 101325 Pa

☐ SELECTIVE RATIO OF CAPTURED CARBON DIOXIDE r = 100

△ SELECTIVE RATIO OF CAPTURED CARBON DIOXIDE r = 25

◇ SELECTIVE RATIO OF CAPTURED CARBON DIOXIDE r = 20

CONDITION IN WHICH CONCENTRATION OF RECOVERED CARBON DIOXIDE OF 95% IS MET IN EACH r

Y-axis: DEMANDED EFFECTIVE MOLAR QUANTITY $a$ OF CAPTURED CARBON DIOXIDE OF CARBON DIOXIDE SORBENT (mol/L)

X-axis: FILLING RATE f OF CARBON DIOXIDE SORBENT (%)

# FIG. 5

# FIG. 6

TEMPERATURE : 50°C
PRESSURE : 101325 Pa

☐ SELECTIVE RATIO OF CAPTURED
  CARBON DIOXIDE r = 1000
△ SELECTIVE RATIO OF CAPTURED
  CARBON DIOXIDE r = 150
◇ SELECTIVE RATIO OF CAPTURED
  CARBON DIOXIDE r = 100

CONDITION IN WHICH CONCENTRATION
OF RECOVERED CARBON DIOXIDE OF
99% IS MET IN EACH r

# FIG. 7

EP 2 567 746 A1

# FIG. 8

| TEMPERATURE : 50℃ | □ SELECTIVE RATIO OF CAPTURED CARBON DIOXIDE r = 500 |
| PRESSURE : 101325 Pa | △ SELECTIVE RATIO OF CAPTURED CARBON DIOXIDE r = 200 |
| | ◇ SELECTIVE RATIO OF CAPTURED CARBON DIOXIDE r = 180 |

CONDITION IN WHICH CONCENTRATION
OF RECOVERED CARBON DIOXIDE OF
95% IS MET IN EACH r

DEMANDED EFFECTIVE MOLAR QUANTITY a
OF CAPTURED CARBON DIOXIDE
OF CARBON DIOXIDE SORBENT (mol/L)

FILLING RATE f OF CARBON DIOXIDE SORBENT (%)

# FIG. 9

TEMPERATURE : 50°C
PRESSURE : 1013250 Pa

□ SELECTIVE RATIO OF CAPTURED CARBON DIOXIDE r = 500
△ SELECTIVE RATIO OF CAPTURED CARBON DIOXIDE r = 200
◇ SELECTIVE RATIO OF CAPTURED CARBON DIOXIDE r = 180

CONDITION IN WHICH CONCENTRATION OF RECOVERED CARBON DIOXIDE OF 95% IS MET IN EACH r

Y-axis: DEMANDED EFFECTIVE MOLAR QUANTITY a OF CAPTURED CARBON DIOXIDE OF CARBON DIOXIDE SORBENT (mol/L)

X-axis: FILLING RATE f OF CARBON DIOXIDE SORBENT (%)

## FIG. 10

TEMPERATURE : 600℃
PRESSURE : 101325 Pa

☐ SELECTIVE RATIO OF CAPTURED
CARBON DIOXIDE r = 500
△ SELECTIVE RATIO OF CAPTURED
CARBON DIOXIDE r = 200
◇ SELECTIVE RATIO OF CAPTURED
CARBON DIOXIDE r = 180

CONDITION IN WHICH CONCENTRATION
OF RECOVERED CARBON DIOXIDE OF
95% IS MET IN EACH r

DEMANDED EFFECTIVE MOLAR QUANTITY a
OF CAPTURED CARBON DIOXIDE
OF CARBON DIOXIDE SORBENT (mol/L)

FILLING RATE f OF CARBON DIOXIDE SORBENT (%)

Europäisches
Patentamt

European
Patent Office

Office européen
des brevets

# EUROPEAN SEARCH REPORT

Application Number

EP 12 18 0821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 426 937 A1 (SAIBU GAS CO [JP]; MITSUBISHI PETROCHEM ENG [JP]) 15 May 1991 (1991-05-15) * figures; tables * ----- | 1-4 | INV. B01D53/04 |
| X | WO 2009/126607 A2 (INNOSEPRA LLC [US]; JAIN RAVI [US]) 15 October 2009 (2009-10-15) * page 7, line 29 - page 8, line 27; figures; example 1 * ----- | 1-4 | |

TECHNICAL FIELDS
SEARCHED      (IPC)

B01D

The present search report has been drawn up for all claims

| Place of search | Date of completion of the search | Examiner |
|---|---|---|
| Munich | 2 January 2013 | Persichini, Carlo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**          EP 12 18 0821

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2013

| Patent document cited in search report | | Publication date | Patent family member(s) | | Publication date |
|---|---|---|---|---|---|
| EP 0426937 | A1 | 15-05-1991 | CN | 1051518 A | 22-05-1991 |
| | | | EP | 0426937 A1 | 15-05-1991 |
| | | | JP | 2005128 C | 11-01-1996 |
| | | | JP | 3151013 A | 27-06-1991 |
| | | | JP | 7024735 B | 22-03-1995 |
| WO 2009126607 | A2 | 15-10-2009 | AU | 2009233890 A1 | 15-10-2009 |
| | | | CA | 2726383 A1 | 15-10-2009 |
| | | | CN | 102083512 A | 01-06-2011 |
| | | | EP | 2427255 A2 | 14-03-2012 |
| | | | JP | 2012522627 A | 27-09-2012 |
| | | | WO | 2009126607 A2 | 15-10-2009 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001205045 A
- JP 8131767 A